# EUROPEAN PATENT SPECIFICATION

(11) **EP 3 366 169 B1**
(45) Date of publication and mention of the grant of the patent: **10.11.2021**
(21) Application number: 18159239.5
(22) Date of filing: 28.02.2018
(51) Int. Cl.: A47G 25/00, A47F 7/08, B62M 3/08

(54) **STORAGE CLIP FOR CYCLING SHOES HAVING CLEATS**
AUFBEWAHRUNGS-CLIP FÜR FAHRRAD SCHUHE MIT PEDALPLATTEN
PINCE DE STOCKAGE POUR CHAUSSURES DE VÉLO À TAQUETS

(30) Priority: 28.02.2017 GB 201703216
(43) Date of publication of application: 29.08.2018
(73) Proprietor: Espier Holdings Ltd, Totnes, Devon TQ9 5AL (GB)
(72) Inventor: Taverner, Alistair, Totnes, Devon TQ9 5AL (GB)
(74) Representative: Sandersons

(56) References cited:
- GB-A- 1 061 309
- US-A1- 2007 137 430

## Description

The present invention relates to a one-piece storage clip according to claim 1.

US 2007/137430 A1 relates to a pedal structure without front clamping members set thereon.

This invention has been developed principally for use with cleats for cycling shoes, and therefore will be described herein with particular emphasis on this use.

Cycling cleats are used to provide a temporary connection between a clipless cycling shoe and a pedal. There are two main types of cycling cleats depending on the activity to be undertaken; mountain bike cleats and road cycling cleats. A mountain bike cleat is secured to the bottom of a mountain bike shoe using screws. Mountain bike cleats are designed to secure in a recess formed in the sole of the cycling shoe and this enables the shoe to be used when not cycling without much discomfort to the user. Road cycling cleats are designed to secure to a surface on the sole of a shoe, rather than in a recess and can be more difficult to use when not cycling.

Both road and mountain bike cleats operate in the same way insofar as they secure to a pedal by having a front edge which locates in an opening provided in the front of the pedal. A spring-loaded hook at the rear of the pedal then snaps over a ledge at the rear of the cleat.

As a result of the cleats, cycling shoes do not tend to store away neatly. This is particularly the case for road cycling cleats where the connection of the cleat means that the surface of the sole is not flat. Since cycling shoes are not suitable for general everyday use they are more prone to being lost, either during transport or whilst stored away.

Furthermore, the nature of use of cycling shoes means that they are exposed to the elements and when they get wet they can take a long time to dry. This makes storing the shoes even more cumbersome and inconvenient.

It is a principle aim of the present invention to provide a clip for shoes having cleats which serves to address the above problems and which enables such shoes to be stored easily and conveniently.

According to this invention, there is provided a one-piece storage clip used to secure clipless cycling shoes to a wall or other surface for storage, the one-piece storage clip for cycling shoes having cleats to secure to the cleat of a cycling shoe, the clip formed from a single piece of sheet metal, metal wire or injection moulded plastic and comprising a generally planar base plate having an arm extending therefrom, the arm defining an opening for engaging the front edge of a cleat and a retaining tab carried by the base plate and arranged to engage the rear edge of a cleat by resilient deformation of the retaining tab, the retaining tab extending at an angle of less than 90° with respect to the base plate.

The term "one-piece" as used herein with reference to the storage clip is intended to mean a single piece form rather than separate connected parts. A single piece form ensures the clip remains sturdy in use and also enables manufacturing costs to be minimised.

The arm may be resiliently deformable so as to provide a degree of flexibility, which may be beneficial in flexing the clip when securing the clip to a cleat and also when removing the clip from the cleat. An opening may be formed mid-way along the arm and extend through the planar base plate to aid resilient flexing of the arm.

Preferably one or more hole is defined through the base plate into which a securing member, such as a screw or bolt can be inserted. In this arrangement, the clip may be used to secure a cleat to a surface, such as a wall. This ensures that shoes with attached cleats can be stored away in a tidy fashion when not being used.

In a preferred arrangement, the arm has a free end remote from the base plate and comprises an intermediate section adjacent the base plate and an end section toward the free end. The intermediate section may extend at an angle with respect to the base plate and the end section of the arm may extend at an angle with respect to the intermediate section. The intermediate section may be at an angle of between about 45 to 170° to the base plate. Preferably, the end section of the arm extends in a direction linearly or laterally away from the base plate. Conveniently, this configuration may enhance the resiliency of the clip. The retaining tab also extends at an angle with respect to the base plate. The angle of the base plate to the tab is less than 90°.

The arm and the retaining tab may be generally opposed such that the clip is generally U-shaped in cross section. This shape, along with the resilient properties of the clip serves, in use, to apply pressure to a secured cleat to assist the connection of the clip thereto.

The retaining tab is arranged to engage the rear part of the cleat and preferably includes a free edge opposed to the base plate and two opposed side edges. The retaining tab may be any shape required to engage appropriately with the cleat.

The clip ideally secures to the cleat when the cleat is connected to a shoe. Different types of cleat are available and these vary in shape, size and configuration depending on the shoe to be worn and the activity to be undertaken. There are two main types of cleats for cycling shoes; road cycling cleats which are larger and more rigid and mountain bike cleats which are smaller and faster to release. In a preferred arrangement, the clip is configured to secure to the cleat of a road cycling shoe and/or a mountain bike shoe.

In one embodiment, the retaining tab may be shaped so as to extend through an existing opening in a cleat. A flange may extend from the free edge and may be located substantially midway between the opposed side edges. This embodiment is suitable for connection to a road type cleat whereby the flange may engage in an opening formed through the cleat.

In an alternative embodiment, suitable for a mountain bike type cleat, two flanges may be provided extending from the free edge, one each end of the free edge with a gap formed therebetween in which part of a cleat may be held. Alternatively, a recess may be formed along the free edge of the retaining tab, thereby in effect forming two flanges at the free edge. In this arrangement, preferably the recess is formed substantially midway between the opposed side edges so that part of a cleat may be held within the recess.

The present invention also provides two one-piece storage clips, as hereinbefore described, secured together. Advantageously, the clips may be connected back to back by way of the back plates. The storage clips may be connected together using securing members, such as bolts, through the one or more hole defined in the respective base plates. In this arrangement, the clips may be used to hold two shoes, incorporating cleats, together. This is beneficial not only for storage but also for transporting shoes as it ensures that the shoes remain together as pairs and one cannot be separated or otherwise lost.

The clip may further be provided with a release member arranged to connect to the base plate and configured to facilitate removal of the clip from a cleat. The release member may be used to lever the clip from a cleat.

Preferably one or more hole is formed through the release member into which a securing member can be inserted. These holes may conveniently be aligned to correspond with holes provided in the base plate such that the securing member serves to connect the clip and release member together. Preferably the release member is planar and lies parallel to and in the same plane as the base plate, when connected together. Even more preferably the release member extends beyond the base plate to provide a lever for a user to grip.

The release member may include a profile defined with one or more lip to facilitate opening of bottles, i.e. to serve as bottle opener. Such a profile may conveniently be provided on the lever of the release member. Furthermore, the release member may also include an opening for the attachment of a securing clip, such as a carabiner clip. This may be useful in for connecting the shoes to other items such as a rucksack. The provision of a bottle opener and/or opening increases the versatility of the clip by negating the need to carry a separate bottle opener, should one be required, and allowing connection to other items, such as a bag, which can be useful for transportation.

The present invention further extends to a one-piece storage clip set comprising two one-piece storage clips, as hereinbefore described and a release member as also hereinbefore described. The release member may be connected between the storage clips and used as a lever to release clips from cleats.

The clip and/or release member is formed from a single piece of sheet metal, metal wire or injected moulded plastic. In a preferred arrangement, the clip and or release member is formed from metal, such as steel. Metal may be punched and bent into shape during manufacture. The metal may be carbon spring steel and may include a coating to prevent rusting. Metal provides the required structural integrity and a clip and/or release member is also easier and more cost effective to produce than if formed from other materials.

By way of example only, two embodiments of this invention will now be described in detail, reference being made to the accompanying drawings in which:
**Figure 1** is a perspective view of the underside of a mountain bike cycling shoe with cleat;
**Figure 2** is an enlarged perspective view of the cleat of Figure 1;
**Figure 3** is a perspective view of a first embodiment of clip according the present invention for connection to the cleat of Figure 2;
**Figure 4** is a perspective view of the clip of Figure 3 connected to the cleat of Figure 2;
**Figure 5** is a perspective view of a second embodiment of clip according the present invention; and
**Figure 6** is a perspective view of a one-piece storage clip set according to the present invention.

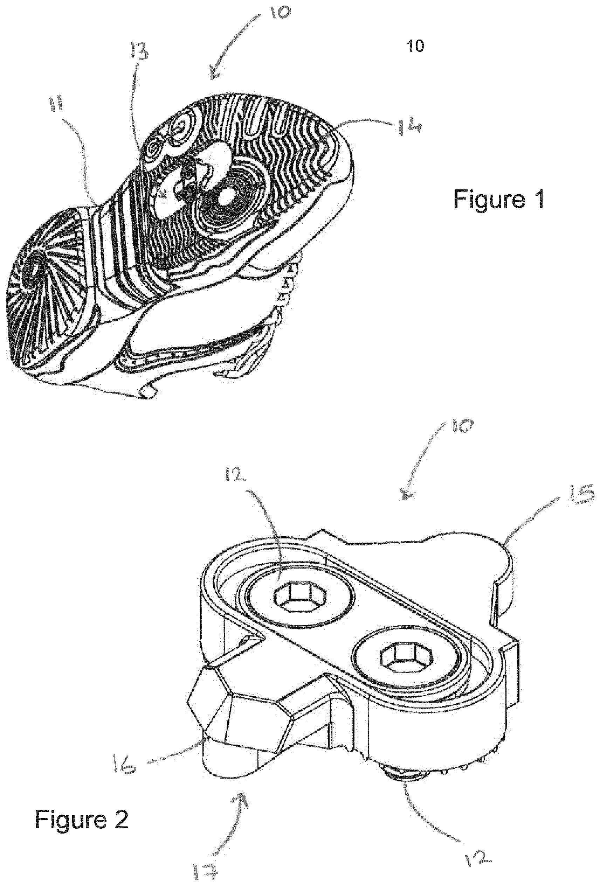

Referring initially to Figures 1 and 2, there is shown a mountain bike cleat 10 for connection to a clipless cycling shoe 11. The mountain bike cleat 10 is secured to the bottom of the shoe 11 using threaded bolts 12 and the shoe 11 is then able to secure to a clipless pedal (not shown) on a mountain bike in order to temporarily connect the shoe 11 to the pedal. Mountain bike cleats 10 are designed to secure in a recess 13 formed in the sole 14 of the cycling shoe 11 and this enables the shoe to be used when not cycling with less discomfort to the user. The other main type of cleat is a road cleat (not shown) and this is designed to secure to a surface on the sole of a shoe, rather than in a recess. Road cycling shoes provide a good power transfer but can be more uncomfortable to use when not cycling.

Both road and mountain bike cleats 10 operate in the same way insofar as they secure to a pedal (not shown) by having a front edge 15 which locates in an opening provided in the front of the pedal. A spring-loaded hook at the rear of the pedal then snaps over a ledge 16 at the rear of the cleat 17.

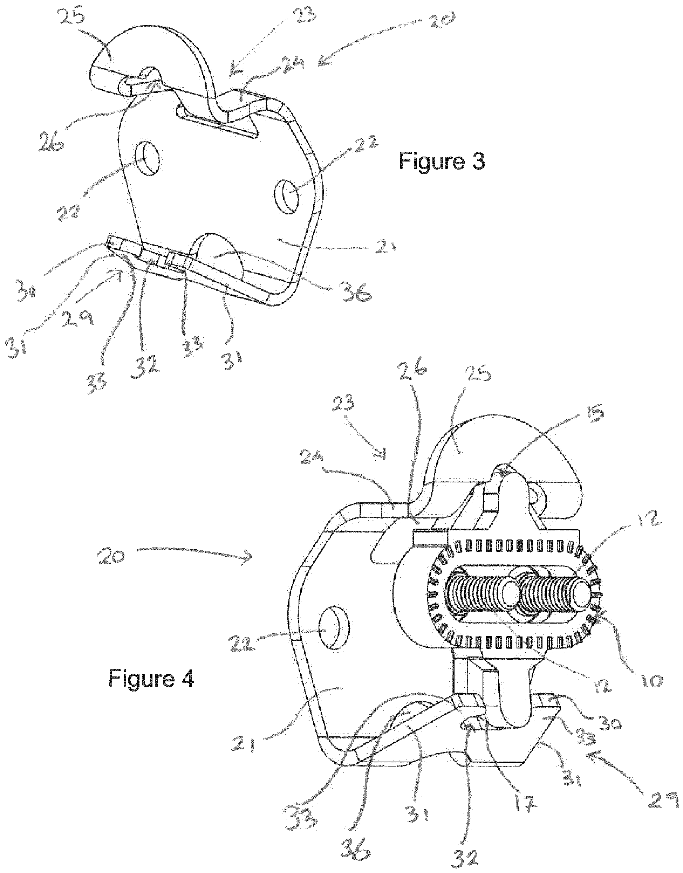

Referring now to Figures 3 and 4, there is shown a first embodiment of storage clip 20 for use with a mountain bike cleat 10. The clip 20 includes a base plate 21 which is generally planar and which has two cylindrical openings 22 configured for connection of securing means, such as screws (not shown) to enable the clip 20 to be secured to a wall. An arm 23 extends from the base plate 21 through a curved corner configuration leading to an intermediate section 24 which is disposed generally at a right angle relative to the base plate. An end section 25 is bent in a curve round such that it extends from the intermediate section 24 generally parallel to and away from the base plate 21. An opening 26 is formed through the arm and this is shaped to engage the front edge 15 of a mountain bike cleat 10. The opening 26 extends between the base plate 21, the intermediate section 24 and the end section 25 of the arm 23.

Extending from the base plate 21 at the end opposed to the arm 23 is a retaining tab 29. The retaining tab 29 extends at an acute angle to the base plate 21 towards the arm 23 and defines a free edge 30 and two opposed side edges 31. The retaining tab 29 is generally planar but includes a T-shaped recess 32 formed midway along the free edge 30 to define two flanges 33 either side. The retaining tab 29 is configured to resiliently deform so that the two flanges 33 can engage the rear edge 17 of a mountain bike cleat, as shown in Figure 4.

A second opening 36 is formed through the base plate 21 in the corner region between the base pate 21 and the retaining tab 29. The provision of a second opening 36 serves to increase the flexibility of the clip 20 and also requires less material thus minimising manufacturing costs and ensuring a small and tidy design.

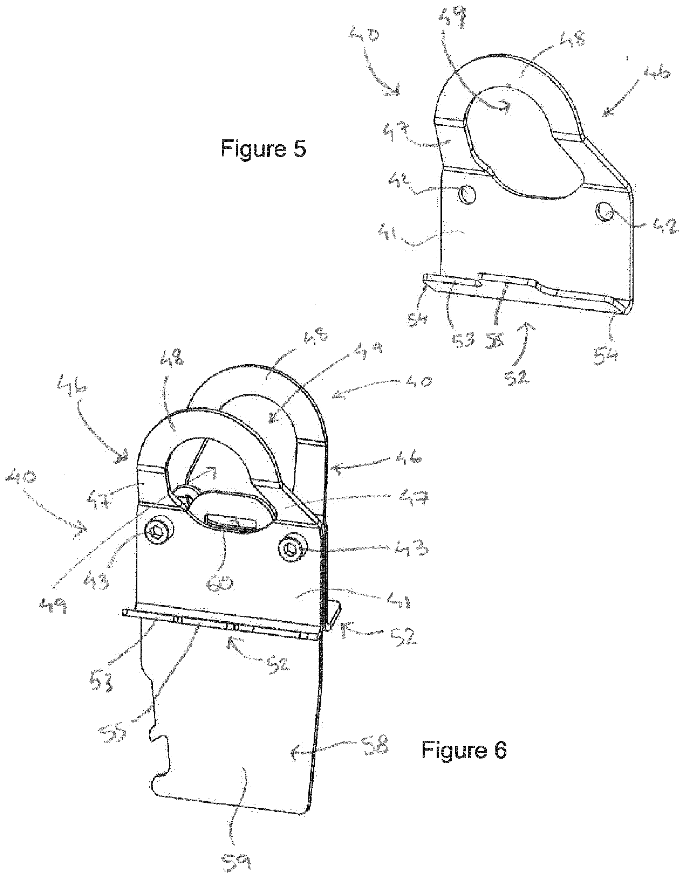

Referring now to Figures 5 and 6, there is shown a second embodiment of storage clip 40 for use with a road cleat (not shown). This clip 40 is very similar to the mountain bike cleat clip 20 and includes a planar base plate 41 having two openings 42 for the connection of securing means 43.

An arm 46 extends from the base plate 41 of the road cleat clip 40, at an angle, leading to an intermediate section 47. An end section 48 extends at an angle from the intermediate section 47. A generally circular opening 49 is formed through the arm 46 and this is shaped to engage the front edge of a road cleat. The opening 49 extends between the base plate 41, the intermediate section 47 and the end section 48 of the arm 46.

As with the first embodiment, a retaining tab 52 extends from the base plate 41. The retaining tab 52 extends from the base plate 41 at less than 90 degrees and defines a free edge 53 and two opposed side edges 54. The retaining tab 52 is generally planar but includes a substantially rectangular flange 55 extending midway along the free edge 53. The retaining tab 52 extends further in the region of the flange 55 so that the flange is offset from the free edge 53. The retaining tab 52 is configured to resiliently deform so that the flange 55 can engage the rear edge of a road cleat (not shown).

The mountain bike and road cleat clips 20, 40 are formed from a single piece of material. This ensures that the clips are robust and means that the manufacture thereof is cost effective. Additionally, the single form design ensures that the clips can be smaller and more aesthetically pleasing than clips formed from more than one connected part.

As shown in Figure 6, a release member 58 may be connected to each clip 20, 40 of the present invention to assist with removal of the clip from a connected cleat. The release member 58 is planar and includes two holes (not visible) appropriately spaced so as to align with the holes 42 formed in the base plate 41. The release member 58 is designed to abut and to extend beyond the base plate 41 to provide a lever 59 for a user to grip to remove the clip from a cleat. A generally rectangular opening 60 at one end of the release member 58, adjacent the base plate 41, allows a securing clip (such as a carabiner) to be connected to release member 58. Part of the edge of the lever 59 is profiled to form lips 61 which can be used to open a bottle.

In use, the clips 20, 40 can be used to secure clipless cycling shoes to a wall or other surface for storage. This is achieved by mounting the clip 20, 40 of the present invention to the wall or surface using screws or bolts secured through the holes 22, 42 in the base plate 21, 41. The cleat on a shoe may then be attached to the mounted clip 20, 40 so that the arm 23, 46 engages the front edge of the cleat and the retaining tab 29, 52 engages the rear edge of the cleat.

The clips may also be used to secure clipless cycling shoes together as shown in Figure 6. This may be beneficial for storing the shoes and enables the shoes to be easily transported together. This may be achieved by securing the base plates 41 of two clips 40 together back to back by way of securing members, such as bolts 43 through the holes 42. If desired, as shown in Figure 6, a release member 58 can be secured between the clips 40 to assist with removal of the clips 40 from the cleats.

## Claims

1. A one-piece storage clip (20) used to secure clipless cycling shoes to a wall or other surface for storage, the one-piece storage clip for cycling shoes having cleats to secure to the cleat of a cycling shoe, the clip formed from a single piece of sheet metal, metal wire or injection moulded plastic and comprising a generally planar base plate (21) having an arm (23) extending therefrom, the arm defining an opening (26) for engaging the front edge (15) of a cleat and a retaining tab (29) carried by the base plate and arranged to engage the rear edge (17) of a cleat by resilient deformation of the retaining tab, the retaining tab extending at an angle of less than 90° with respect to the base plate.

2. A one-piece storage clip as claimed in claim 1 wherein one or more hole is defined through the base plate into which a securing member can be inserted.

3. A one-piece storage clip as claimed in claim 1 or claim 2, wherein the arm has a free end remote from the base plate and wherein the arm comprises an intermediate section (47) adjacent the base plate and an end section at the free end.

4. A one-piece storage clip as claimed in claim 3, wherein the intermediate section extends at an angle of between 45 to 170° with respect to the base plate.

5. A one-piece storage clip as claimed in any of the preceding claims wherein the clip is generally U-shaped in cross section.

6. A one-piece storage clip as claimed in any of the preceding claims, in which the retaining tab has a free edge (53) and two opposed side edges (54).

7. A one-piece storage clip as claimed in claim 6, wherein a flange (55) extends from the free edge.

8. A one-piece storage clip as claimed in claim 6, wherein a recess is formed along the free edge of the retaining tab.

9. A one-piece storage clip as claimed in any of the preceding claims further comprising a release member (58) configured for connection to the base plate for removing the clip from a cleat.

10. A one-piece storage clip as claimed in claim 9, wherein at least a part of the release member includes a profile defined to serve as a bottle opener.

11. A one-piece storage clip as claimed in any of claims 9 to 10 wherein the release member further defines an opening for the attachment of a securing clip.

12. A one-piece storage clip set comprising two one-piece storage clips, as claimed in any of claims 1 to 11 and a release member (58) configured for connection to the base plate of each storage clip for removing the clips from cleats.

## Patentansprüche

1. Einteilige Aufbewahrungsklammer (20), die zum Aufhängen von Clipless-Fahrradschuhen an einer Wand oder einer anderen Oberfläche zu deren Aufbewahrung verwendet werden, wobei die einteilige Aufbewahrungsklammer für Fahrradschuhe Cleats zum Verbinden mit dem Cleat eines Fahrradschuhs aufweist, wobei die Klammer aus einem einzelnen Stück Metallblech, Metalldraht oder Spritzgusskunststoff gebildet ist und eine allgemein ebene Basisplatte (21) mit einem davon ausgehenden Arm (23) aufweist, wobei der Arm eine Öffnung (26) zum Eingriff mit der Vorderkante (15) eines Cleats und einen Haltefortsatz (29) aufweist, der von der Basisplatte getragen wird und dazu ausgestaltet ist, um die hintere Kante (17) eines Cleats durch elastische Verformung des Haltefortsatzes zu greifen, wobei der Haltefortsatz unter einem Winkel von weniger als 90° mit Bezug auf die Basisplatte verläuft.

2. Einteilige Aufbewahrungsklammer wie in Anspruch 1 beansprucht, wobei eine oder mehrere Öffnungen durch die Basisplatte gebildet sind, in die ein Befestigungselement eingeführt werden kann.

3. Einteilige Aufbewahrungsklammer wie in Anspruch 1 oder Anspruch 2 beansprucht, wobei der Arm ein freies Ende entfernt von der Basisplatte hat und wobei der Arm einen mittleren Abschnitt (47) benachbart der Basisplatte und einen Endabschnitt am freien Ende hat.

4. Einteilige Aufbewahrungsklammer wie in Anspruch 3 beansprucht, wobei der mittlere Abschnitt unter einem Winkel zwischen 45 bis 170° mit Bezug auf die Basisplatte verläuft.

5. Einteilige Aufbewahrungsklammer wie in einem der vorhergehenden Ansprüche beansprucht, wobei die Klammer im Querschnitt im Wesentlichen U-förmig ist.

6. Einteilige Aufbewahrungsklammer wie in einem der vorhergehenden Ansprüche beansprucht, bei der der Haltefortsatz eine freie Kante (53) und zwei gegenüberliegende Seitenkanten (54) hat.

7. Einteilige Aufbewahrungsklammer wie in Anspruch 6 beansprucht, wobei von der freien Kante ein Flansch (55) ausgeht.

8. Einteilige Aufbewahrungsklammer wie in Anspruch 6 beansprucht, wobei entlang der freien Kante des Haltefortsatzes eine Ausnehmung gebildet ist.

9. Einteilige Aufbewahrungsklammer wie in einem der vorhergehenden Ansprüche beansprucht, die ein Freigabeteil (58) aufweist, das zur Verbindung mit der Basisplatte zum Lösen der Klammer von einem Cleat ausgestaltet ist.

10. Einteilige Aufbewahrungsklammer wie in Anspruch 9 beansprucht, wobei wenigstens ein Teil des Freigabeteils ein so definiertes Profil aufweist, um als Flaschenöffner zu dienen.

11. Einteilige Aufbewahrungsklammer wie in einem der Ansprüche 9 bis 10 beansprucht, wobei das Freigabeteil ferner eine Öffnung zur Anbringung eines Befestigungselements definiert.

12. Satz einteiliger Aufbewahrungsklammern mit zwei einteiligen Aufbewahrungsklammern wie in einem der Ansprüche 1 bis 11 beansprucht und mit einem Freigabeteil (58), das zur Verbindung mit der Basisplatte jeder Aufbewahrungsklammer ausgestaltet ist, um die Klammern von Cleats zu entfernen.

## Revendications

1. Attache de rangement (20) en une pièce utilisée pour solidariser des chaussures de vélo sans clip à une paroi ou une autre surface de rangement, l'attache de rangement en une pièce étant pour chaussures de vélo et ayant des taquets de fixation au taquet d'une chaussure de vélo, l'attache étant formée à partir d'une unique pièce de feuille de métal, de fil métallique ou de plastique moulé par injection et comprenant une plaque de base (21) généralement plane ayant un bras (23) s'étendant à partir de celle-ci, le bras définissant une ouverture (26) pour engager le bord avant (15) d'un taquet et une patte de retenue (29) portée par la plaque de base (21) et agencée pour engager le bord arrière (17) d'un taquet par déformation élastique de la patte de retenue, la patte de retenue s'étendant selon un angle de moins de 90° par rapport à la plaque de base.

2. Attache de rangement en une pièce selon la revendication 1, dans laquelle un ou plusieurs trous sont définis à travers la plaque de base dans lesquels un élément de fixation peut être inséré.

3. Attache de rangement en une pièce selon la revendication 1 ou 2, dans laquelle le bras a une extrémité libre éloignée de la plaque de base et dans laquelle le bras comprend une section intermédiaire (47) adjacente à la plaque de base et une section d'extrémité à l'extrémité libre.

4. Attache de rangement en une pièce selon la revendication 3, dans laquelle la section intermédiaire s'étend selon un angle compris entre 45 et 170° par rapport à la plaque de base.

5. Attache de rangement en une pièce selon l'une quelconque des revendications précédentes, dans laquelle l'attache est généralement en forme de U en coupe transversale.

6. Attache de rangement en une pièce selon l'une quelconque des revendications précédentes, dans laquelle la patte de retenue a un bord libre (53) et deux bords latéraux opposés (54).

7. Attache de rangement en une pièce selon la revendication 6, dans laquelle une bride (55) s'étend depuis le bord libre.

8. Attache de rangement en une pièce selon la revendication 6, dans laquelle un évidement est formé le long du bord libre de la patte de retenue.

9. Attache de rangement en une pièce selon l'une quelconque des revendications précédentes, comprenant en outre un élément de libération (58) configuré pour être connecté à la plaque de base pour retirer l'attache d'un taquet.

10. Attache de rangement en une pièce selon la revendication 9, dans laquelle au moins une partie de l'élément de libération comprend un profil défini pour servir d'ouvre-bouteille.

11. Attache de rangement en une pièce selon la revendication 9 ou 10, dans laquelle l'élément de libération définit en outre une ouverture pour la fixation d'une attache de fixation.

12. Ensemble d'attaches de rangement en une pièce comprenant deux attaches de rangement en une pièce, selon l'une quelconque des revendications 1 à 11, et un élément de libération (58) configuré pour être connecté à la plaque de base de chaque attache de rangement pour retirer les attaches de taquets.
